# EUROPEAN PATENT APPLICATION

(11) **EP 4 729 379 A1**
(43) Date of publication of application: **22.04.2026**
(21) Application number: 24207833.5
(22) Date of filing: 21.10.2024
(51) Int. Cl.: B60T 13/68, B60T 13/66, B60T 8/32

(54) **BRAKE SYSTEM AND METHOD FOR CONTROLLING A BRAKE PRESSURE**

(71) Applicant: KB Intellectual Property GmbH & Co. KG, 82049 Pullach (DE)
(72) Inventor: Gücker, Ulrich, 71701 Schwieberdingen (DE); Weiland, Robert, 70839 Gerlingen (DE); Mustapha, Adnan, 75433 Maulbronn (DE); Röther, Friedbert, 74389 Cleebronn (DE); Schöneck, Markus, 74388 Talheim (DE); Behringer, Reinhold, 71735 Nussdorf-Eberdingen (DE); Modi, Shubham, 71634 Ludwigsburg (DE); Schmortte, Birgit, 70565 Stuttgart (DE); Hecker, Falk, 71706 Markgröningen (DE); Wieder, Gerhard, 74354 Besigheim (DE)

(57) **Abstract**

A brake system for a commercial vehicle is disclosed. The vehicle is connectable with a trailer and comprises a front axle (10) with front brake cylinders (11, 12) controlled by a first brake circuit, at least one rear axle (20) with rear brake cylinders (21, 22) controlled by a second brake circuit, and a pneumatic trailer connector (50). The brake system comprises a foot brake module, FBM, (100), a pressure control module, PCM, (200), and a pressure control line (250). The FBM (100) comprises a pneumatic output port (110) for the first brake circuit, an input interface (130) for receiving a brake request, the FBM (100) being configured to generate a control pressure (101) at the pneumatic output port (110) based on the brake request. The PCM (200) includes a first channel port (210), a second channel port (220), a first pneumatic backup port (230), and a second pneumatic backup port (240), the first channel port (210) being configured to provide a first channel output (201) for the front axle (10), the second channel port (220) being configured to provide a second channel output (202) for the at least one rear axle (20), wherein the first pneumatic backup port (230) is fluidly connectable to the first channel port (210) and the second pneumatic backup port (240) is fluidly connectable to the second channel port (220). The pressure control line (250) connects the second pneumatic backup port (240) with the first channel port (210) or with the pneumatic output port (110), the pressure control line (250) comprises a valve port (255) configured to couple to the pneumatic trailer connector (50) to control a brake pressure in the trailer.

## Description

The present invention relates to a brake system, to a commercial vehicle, and to a method for controlling a brake pressure at one or more axles and, in particular, to a scalable layout of an electronic brake system, EBS, with optional trailer control module or trailer control valve.

Commercial vehicles are required to have two brake circuits that are separated from each other. For example, one circuit controls the front axle and one the rear axle. Moreover, commercial vehicles often have multiple rear axles which, likewise, may be controlled by different channels to set individually the pneumatic brake pressures.

In this disclosure, conventional pneumatic brake systems extended with anti-lock braking system (ABS) are referenced as ABS systems. In contrast to these conventional ABS systems there are electronic brake systems, EBS, that control electronically a brake pressure at axles or wheels utilizing electronic pressure control modules, EPM. In an ABS system, the pressure in the brake cylinders is controlled pneumatically by actuating the foot brake valve (FBV) and pressure control valves, PCV, at the wheel ends. In an EBS system, the driver's request is determined electronically by means of a position sensor in the foot brake module (FBM) and transmitted to a braking algorithm to calculate the target pressures which is transmitted electronically to pressure control units to apply the target pressure to the brake cylinders.

A possible trailer (semi-trailer or drawbar trailer) in an ABS braking system is controlled by a Trailer Control Valve (TCV). In the EBS system, on the other hand, the trailer is controlled by a Trailer Control Module (TCM). The TCV works purely pneumatically or mechanically, whereas the TCM integrates three electromagnets and a pressure sensor. It is connected to a control unit to implement a pressure control circuit (pressure control loop).

Conventional EBS and ABS systems are described, for example, in EP2398684B1, EP2576297B2, EP4077075B1, EP3856591B1, DE102019129153, EP3507154B1, and EP 4126609 B1.

Although an EBS system offers significant advantages (e.g. the electronic controlling), they are more expensive than the conventional ABS systems to meet regularity requirements.

Therefore, there is a demand for a brake system that overcome these disadvantages, i.e. fulfills the regulatory requirements, while relying on less expensive components and are easily to implement (e.g., use available components on vehicle) and do not need additional installation space. In particular, there is a demand to achieve the same functionality with a less expensive TCV instead of a TCM.

At least some of these problems of the conventional brake systems are overcome by a brake system of claim 1 or a method according to claim 12. The dependent claims refer to further advantageous realizations of the subject matter of the independent claims.

The present invention relates to a brake system for a commercial vehicle connectable with a trailer (e.g., a truck, a tractor, a bus, a towing vehicle etc.). The commercial vehicle comprises a front axle with front brake cylinders controlled by a first brake circuit, at least one rear axle with rear brake cylinders controlled by a second brake circuit, and a pneumatic trailer connector. The brake system comprises a foot brake module, FBM, a pressure control module, PCM, and a pressure control line. The FBM comprises a pneumatic output port for the first brake circuit and an input interface for receiving a brake request. The FBM is configured to generate a control pressure at the pneumatic output port based on the brake request. The PCM comprises a first channel port, a second channel port, a first pneumatic backup port, and a second pneumatic backup port. The first channel port is configured to provide a first channel output for the front axle. The second channel port is configured to provide a second channel output for the at least one rear axle. The first pneumatic backup port is fluidly connectable to the first channel port. The second pneumatic backup port is fluidly connectable to the second channel port. The pressure control line connects the second pneumatic backup port with the first channel port. Additionally, or alternatively, the pressure control line connects the second pneumatic backup port with the pneumatic output port of the FBM. The pressure control line comprises a valve port configured to couple to the pneumatic trailer connector to control a brake pressure in the trailer.

The PCM may be an electronic pressure module or an electro-pneumatic modulator, EPM, which may also be named as an electronic pressure modulator. The FBM may thus provide only a single channel or single circuit device (with only one pneumatic control channel). The input interface may be a pedal or another human operated interface. However, the input interface may also receive the brake request from any vehicle unit such as an autonomous driving module, a stability system or a drive dynamics system. But the brake request may also come from a driver (e.g. when the input interface is the brake pedal). The trailer connector is not necessarily part of the brake system. Instead, the brake system can be used for the different trailer connectors. The couplings may be provided by respective plugs, terminals etc.

The pneumatic trailer connector may include a first control input port connectable to the pressure control line (or its valve port) and a second control input port. Optionally, the brake system comprises further a select-low valve configured to forward a lower pressure of both sides of the rear brake cylinders to the second control input port of the pneumatic trailer connector.

Optionally, the brake system may include the pneumatic trailer connector, and the pneumatic trailer connector may be or includes a trailer control valve, TCV. The TCV may be controllable only pneumatically and/or mechanically (e.g. the TCV does not has electronic components and/or electronic inputs and/or sensors). In addition, an optional pressure control valve may be arranged near or in the TCV to control a brake pressure provided to the trailer.

Optionally, the pneumatic trailer connector, which may again be part of the brake system, is or includes a trailer control module, TCM. The TCM may comprise one or more solenoids and a pressure sensor to implement a pressure control circuit. Moreover, the TCM may include a pneumatic control input connected to the pressure control line (or its valve port) to enable a pneumatic control. In addition, the TCM may include an electronic input to enable an electronic control.

The at least one rear axle may include a first rear axle with first rear brake cylinders and a second rear axle with second rear brake cylinders. Then, optionally, the brake system includes an interconnected relay valve with a control input connected to the second channel port and a pneumatic output connected to the first rear brake cylinders and to the second rear brake cylinders. The interconnecting relay valve may be adapted to adjust a volume pressure from the pressure output of the second channel port of the PCM to ensure that it is insufficient for four brake cylinders at both rear axles.

Optionally, the FBM is configured to sense the activation or actuation of the input interface (e.g. a brake pedal) and to generate electronic brake signals based on the sensed activation/actuation. Then, optionally, the PCM includes an electronic controller configured to receive the electronic brake signals and to control the PCM to generate, based thereon, the first channel output and/or the second channel output. Accordingly, the brake system allows a redundant control: the electronic control based on the electronic brake signals may be a primary operation mode, and the pneumatic control based on the control pressure generated in the FBM may be a secondary or a backup operational mode. The electronic controller may be an integrated component of the PCM (e.g. in a common housing).

Optionally, the PCM is configured to connect the first pneumatic backup port with the first channel port only when the electronic controller is unable to generate the first channel output and/or the second channel output based on the electronic brake signals. Similarly, the PCM may be configured to connect the second pneumatic backup port with the second channel port only when the electronic controller is unable to generate the first channel output and/or the second channel output based on the electronic brake signals. For this, the PCM may include (solenoid) valves that open/close the corresponding pneumatic lines/channels between the pneumatic backup ports and the respective first/second channel outputs.

Optionally, the PCM includes a first supply pressure, a second supply pressure, a first relay valve and a second relay valve. The first relay valve may be configured to provide a first brake pressure for brake cylinders on the front axle utilizing the first supply pressure. The second relay valve may be configured to provide a second brake pressure for brake cylinders on the at least one rear axle utilizing the second supply pressure. Thus, the PCM may be a 2-circuits, 2-channel PCM and the first and second relay valves may be integrated components of the PCM (e.g. in a common housing). The first and second relay valves provide, in particular, sufficient air pressure volume to the brake cylinders on the respective axles to ensure the desired brake action.

Optionally, the brake system comprising one or more of the following:
- a first air reservoir for supplying the first supply pressure to the PCM and for providing the first supply pressure to the FBM,
- a second air reservoir for supplying the second supply pressure,
- a third air reservoir for providing a third supply pressure as pressure supply for the pneumatic trailer connector,
- one or more wheel speed sensors for determining one or more respective wheel speeds at the front axle and/or wheel speeds at the at least one rear axle,
- one or more brake pad wear sensors for determining one or more respective brake pad wear values at the front axle and/or at the at least one rear axle,
- one or more pressure control valves, PCV, at the front axle and/or at the at least one rear axle, each PCV is configured to adjust a pressure at a respective wheel.

Therefore, according to embodiments, the brake system is able to provide vehicle stability functions such as an anti-lock braking system (ABS), an electronic stabilization program (ESP), a traction control system (TCS), an automatic emergency braking (AEBS) etc.

Optionally, the brake system further comprises at least one select-high valve arranged between two of the air reservoirs (the first, second and third air reservoirs) and to provide a higher pressure value as the first supply pressure, the second supply pressure and/or as the third supply pressure. Thus, the brake system provides also a redundant pressurized air supply.

Embodiments relate also to a vehicle, in particular a commercial vehicle such as a truck, a bus, a towing vehicle with or without a towed vehicle (e.g. trailer, semi-trailer, drawbar trailer) etc., wherein the commercial vehicle comprises a brake system as described before.

Embodiments relate also to a method for controlling a backup brake pressure in a commercial vehicle connectable with a trailer. The commercial vehicle comprises a front axle with front brake cylinders controlled by a first brake circuit, at least one rear axle with rear brake cylinders controlled by a second brake circuit, and a pneumatic trailer connector for the trailer. The method includes the steps:
- receiving a brake request by an input interface of a foot brake module, FBM;
- generating a control pressure for the front axle based on the received brake request;
- providing, by a pressure control module, PCM, a first channel output for the front axle based on the received control pressure;
- providing, by the PCM, a second channel output for the at least on rear axle based on first channel output or based on the control pressure.

Optionally, the steps of providing the first channel output and/or the second channel output are performed as backup mode if a malfunctioning prevents a primary mode of operation, wherein the primary mode of operation including the steps:
- generating, by the FBM, electronic brake signals based on the brake request;
- generating, by the PCM, a first channel output for the front axle based on the electronic brake signals;
- generating, by the PCM, a second channel output for the rear axle based on the electronic brake signals.

Optionally, a malfunctioning of FBM and/or the PCM is detected, the system may switch to the backup (secondary) mode of operation.

Thus, the primary mode of operation is electronic control such as an electronic brake system (EBS). The pneumatic control based on the generated control pressure by the FBM is only a fallback operational mode if - for some reasons - the electronic control is not available or not reliable.

In summary, embodiments provide a dual-circuit brake system architecture that includes all relevant driving dynamics functions: an anti-lock braking system (ABS), an electronic stabilization program (ESP), a traction control system (TCS), an automatic emergency braking (AEBS). However, embodiments offer cost savings compared to known brake systems. Embodiments overcome the disadvantages of conventional EBSs by providing a low-cost EBS that only needs a single-channel FBM and offers the possibility of supporting both a TCM and a significantly more cost-effective TCV while still meeting all regulatory requirements. Thus, embodiments offer significant cost advantages. Embodiments achieve this cost-optimized EBS system by a hybrid form of the standard ABS and an EBS systems.

Some examples of the brake system and/or methods will be described in the following by way of examples only, and with respect to the accompanying figures, in which:
- Fig. 1: depicts a brake system according to an embodiment of the present invention.
- Fig. 2: depicts further details of the brake system of a commercial vehicle according to embodiments.
- Fig. 3A,3B: depict an embodiments for the braking system of a vehicle with multiple driven rear axles.
- Fig. 4: depict an embodiment for the braking system of a vehicle with multiple rear axles, wherein only one which is driven.
- Fig. 5: shows a schematic flow chart for a method of controlling a brake pressure according to embodiments.

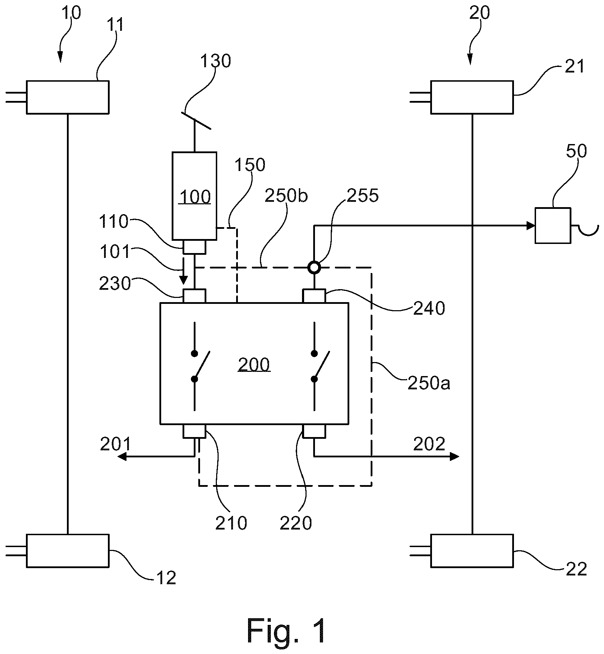

**Fig. 1** depicts a brake system according to an embodiment. The brake system is configured or at least suitable to be used within a commercial vehicle such as a truck, a bus, a towing vehicle with or without a towed vehicle (e.g. trailer, semi-trailer, drawbar trailer) etc. The optional trailer can couple to a pneumatic trailer connector 50 at the commercial vehicle. The commercial vehicle comprises a front axle 10 with front brake cylinders 11, 12 (e.g. one on the left- and one of the right-hand sides) controlled by a first brake circuit. The commercial vehicle comprises at least one rear axle 20 with rear brake cylinders 21, 22 (e.g. on each side one). The rear brake cylinders 21, 22 may be controlled by a second brake circuit.

The brake system comprises a foot brake module, FBM, 100, a pressure control module, PCM, 200 and pressure control line 250 (250a, 250b). The FBM 100 comprises a pneumatic output port 110 for the first brake circuit, an input interface 130 for receiving a brake request (e.g. from a driver or an external vehicle system). The FBM 100 is configured to generate a control pressure 101 for the front axle 10 based on the brake request (e.g. an input value or an activation of the input interface 130).

The PCM 200 comprises a first channel port 210, a second channel port 220, a first pneumatic backup port 230, and a second pneumatic backup port 240. The first channel port 210 is configured to provide a first channel output 201 for the front axle 10. The second channel port 220 is configured to provide a second channel output 202 for the at least one rear axle 20. The first pneumatic backup port 230 is fluidly connectable to the first channel port 210. The second pneumatic backup port 240 is fluidly connectable to the second channel port 220. The pressure control line 250 connects the second pneumatic backup port 240 with the first channel port 210 (see line 250a) or with the pneumatic output port 110 (see line 250b). The pressure control line 250 is configured to couple to the pneumatic trailer connector 50 to control a brake pressure in the trailer. For a valve port 255 (e.g. a plug or terminal) may be available to establish the connection.

The PCM 200 may include solenoid valves to act as switches to enable/disable the fluid connections between first/second pneumatic backup ports 230, 240 and the respective first/second channel ports 210, 220. According to embodiments, the described pneumatic control of the brake system represents a backup mode (secondary mode of operation). In a primary operation mode, the FBM 100 may generate electronic brake signals 150 based on the brake request(s). For this, the FBM 100 may include a position or path sensor to sense the actuation of the input interface 130 and to generate electronic brake signals 150 based on the sensed actuation. Then, the PCM 200 receives the electronic brake signals 150 and controls the PCM 200 to generate, based thereon, the first channel output 201 and the second channel output 202 (in the electronic control). During this primary operation switches in the PCM 200 are open so that the pneumatic control is disabled. If, however, the electronic control (primary operation mode) is malfunctioning, the brake system is able to switch to the backup mode (secondary operation mode) where the switches (e.g. valves) in the PCM 200 are closed to enable the pneumatic control.

Thus, the brake system according to embodiments is an EBS that is able to control electronically a brake pressure at the axles 10, 20 or wheels utilizing a 2C2 EPM 200, i.e. 2-circuits, 2-channel EPM. In addition, embodiments provide a pneumatic backup mode. However, embodiments need only a single-circuit FBM 100. This already provides a cost saving when compared to conventional brake systems.

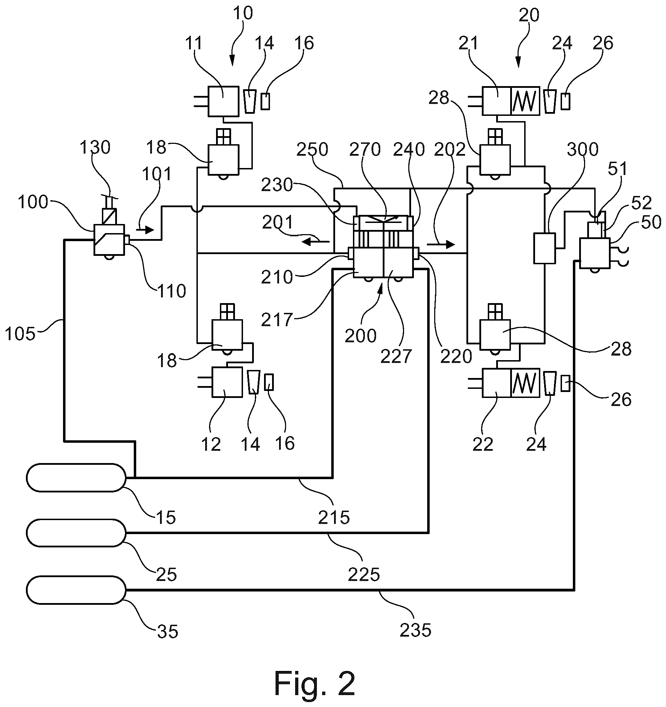

**Fig. 2** depicts further details according to embodiments of the brake system for the commercial vehicle as described with Fig. 1. The exemplary commercial vehicle has again a front axle 10 (e.g. steered axle) with brake cylinders 11, 12 (on both sides) and a rear axle 20 (e.g. driven axle) with respective brake cylinders 21, 22 (on both sides). Each brake cylinder 11, 12, 21, 22 or each wheel is equipped with a respective wheel speed sensors 14, 24 for determining respective wheel speeds at the front axle 10 and/or the at least one rear axle 20. In addition, brake pad wear sensors 16, 26 are arranged for installed brake pads for determining respective brake pad wear values at the front axle 10 and/or the at least one rear axle 20.

Finally, for each brake cylinder 11, 12, 21, 22 the exemplar vehicle includes a respective pressure control valve, PCV, 18, 28 at the front axle 10 and/or at the at least one rear axle 20. The first channel port 210 of the PCM 200 is connected to each PCV 18 on front axle 10, i.e. to the PCV 18 on the right-hand side and to the PCV 18 on the left-hand side. The second channel port 220 of the PCM 200 is connected to each PCV 28 on rear axle 20, i.e. to the PCV 28 on the right-hand side and to the PCV 28 on the left-hand side. Each PCV 18, 28 is configured to adjust a pressure at a respective wheel. Thus, embodiments enable stability systems such as ABS and/or ESP and/or TCS by allowing wheel-individual interventions (brake actuations), for which the determined wheel speed information can be used. According to further embodiments, the number axles may differ. There may be more than one front axle 10 or more than one (driven) rear axle 20.

Furthermore, the PCM 200 couples to a first supply pressure 215 and to a second supply pressure 225 and includes a first relay valve 217 and a second relay valve 227. The first relay valve 217 is configured to provide a first brake pressure for the brake cylinders 11, 12 on the front axle 10 utilizing the first supply pressure 215. The second relay valve 227 is configured to provide a second brake pressure for brake cylinders 21, 22 on the at least one rear axle 20 utilizing the second supply pressure 215. The brake system comprises further a first air reservoir 15 for supplying the first supply pressure 215 to the PCM 200 and for providing the supply pressure 105 to the FBM 100. The brake system comprises further a second air reservoir 25 for supplying the second supply pressure 225 and a third air reservoir 35 for providing a third supply pressure 235 as pressure supply for the pneumatic trailer connector 50.

The brake system may further comprise at least one select-high valve (not shown in the drawing) arranged between two of the depicted air reservoirs 15, 25, 35. The select-high valve will provide the higher-pressure value from the two connected air reservoirs to the supply pressure 215 and/or to the second supply pressure 225 and/or the third supply pressure 235. For example, if the second and the third air reservoir 25, 35 are connected with the select-high valve, the output of the select-high value will be connected to both to the second supply pressure 225 and to the third supply pressure 235. This provides the advantage that a leakage in one of the air reservoirs 15, 25, 35 will not jeopardize the braking system. The select-high valve provides thus a redundancy for the air reservoirs, too.

Thus, according to embodiments front axle 10 and the rear axle(s) 20 are handled by the central PCM 200. For this, the PCM 200 is a 2-channel pressure control module integrated in a single unit (e.g. using a common housing) with two adjustable pressure control channels supplied with two compressed air supplies 215, 225. One service brake pressure (the first channel output 201) is routed to the front axle 10 and the second service brake pressure (the second channel output 202) is routed to the rear axle(s) 20. As in standard EBS systems, the driver's intention can be determined electronically by means of a position of the input interface 130 of the FBM 100 and is transmitted to a braking algorithm (e.g. in an electronic control unit, ECU), which then calculates target pressures at the wheels that are electronically transmitted to the PCM 200. The PCM 200 controls the desired pressure in the brake cylinder 11, 12, 21, 22. For this, the PCM 200 comprises a electronic controller 270 to enable the electronic control (e.g. as a primary operation mode).

### Backup mode

However, in the event of a failure of the electronics or the electronic control, embodiments allow a pneumatic backup mode. To allow this mode, the control pressure 101 (from the pneumatic output port 110 of the FBM 100) is fed into the backup input (first pneumatic backup port 230) of the PCM 200. In the backup mode, the PCM 200 connects the first pneumatic backup port 230 with the first channel port 210 and the second pneumatic backup port 240 with the second channel port 220. Thus, in this mode, the front axle 10 is controlled directly with the control pressure 101 from the pneumatic output port 110 of the FBM 100. Since, according to embodiments, the first channel port 210 is connected to the second pneumatic backup port 240 of the PCM 200 and since the second pneumatic backup port 240 is likewise connected with second output port 220 in backup mode, also the rear axle(s) 20 is/are controlled by the pressure applied to the front axle 10. However, this creates a restraint that has a positive effect on the control of the rear axle 20, which should not block if the vehicle is unladen.

According to another embodiment, the pneumatic output port 110 (i.e. the backup pressure line) of the FBM 100 is connected (see 250b in Fig. 1) directly to both the first pneumatic backup port 230 and the second pneumatic backup port 240 of the PCM 200. In this embodiment, the pressure control line 250 does not provide a connection between first channel port 210 and the first pneumatic backup port 230, but connects both pneumatic backup ports 230, 240. This provides the advantage that the trailer connector 50 receives the control pressure directly from the FBM 100. Because the pressure does not need to propagate through the PCM 200, this provides a faster control of the trailer.

### Trailer coupling

According to the depicted embodiment, the brake system comprises the pneumatic trailer connector 50 (e.g. a trailer control valve, TCV) which includes a first control input port 51 for the pressure control line 250 and a second control input port 52. The first control input port 51 receives thus either the first channel output 201 from the PCM 200 (i.e. a pressure applied to the front axle 10) or the control pressure 101 directly from the FBM 100.

The brake system further comprises a select-low valve 300 arranged to forward a lower pressure of both sides of the rear brake cylinders 21, 22 to the second control input port 52 of the pneumatic trailer connector 50. For this, the select-low valve 300 couples between two nodes, each of them being formed between the respective brake cylinders 21, 22 and the associated PCV 18. Thus, the exemplary TCV 50 can also be controlled (e.g. in a backup mode) by pressure applied to the rear axle(s) 20 service brake. In this second mode of control a time delay may be present until the brake pressure will be built up in the trailer. The select-low valve 300 ensures that a possible activation a traction control (TCS) on one wheel or one side or the (driven) rear axle 20 does not activate the trailer brake. Thus, any stability interventions, such as the TCS-interventions of the rear (driven) axle 20 are prevented from being passed on to the trailer. In addition, a blending between the service brake and the continuous brake (e.g. a retarder) or recuperation is made possible, because brake force will apply quickly in the embodiments whereas a retarder/recuperation brake will need some time to build the desired brake force.

According to further embodiments, the pneumatic trailer connector 50 is a trailer control module (TCM), which does not operate purely pneumatic as the TCV. The TCM integrates, according to embodiments, two electromagnets and a pressure sensor and is connected to a control unit to provide a pressure control circuit (pressure control loop). By relying on a TCM, the trailer braking pressure can be adjusted for stability and driving dynamics purposes. To achieve this functionality also for a TCV 50, according to embodiments, another PCV (not shown in Fig. 2) can be connected downstream or upstream of the TCV 50.

Therefore, the exemplary TCV 50 may provide a similar functionality as a TCM, which may be used instead of the TCV 50. Embodiments may selectively be used with both either with an TCV 50 or with TCM 50. As the TCV, the TCM includes a pneumatic control input connected to the pressure control line 250 to enable a pneumatic control and may include an electronic input to enable an electronic control.

Due to the integrated electronic in the TCM, there is no real need for a select-low valve 300 when the trailer connector 50 is a TCM. A TCM provides already an electronic as well as a pneumatic control option. On the other hand, when utilizing a TCV 50 the redundant control options are ensured using the select-low valve 300.

In contrast to conventional EBS which rely on a TCM, embodiments provide the advantage that they may utilize only a TCV, while complying with all regulatory requirements and achieving a comparable functionality.

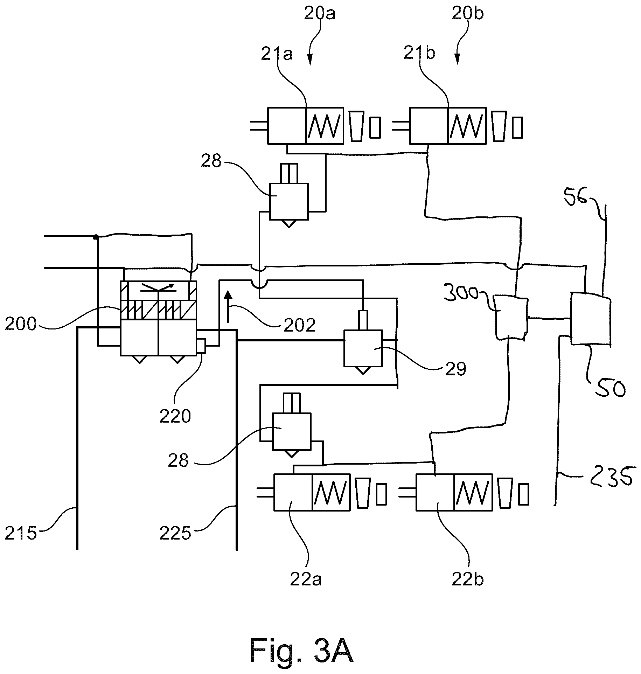

**Fig. 3A** depicts an embodiment for a commercial vehicle with two driven rear axles 20a, 20b, wherein one of which (e.g. the first rear axle 20a) is equipped exemplary with two PCVs 28 (on each side one). The applied pressure on both rear axles is amplified by an interconnected relay valve 29 which is adapted to adjust the volume pressure from the pressure output 202 of the second channel port 220 of the PCM 200 to ensure that it is insufficient for the four brake cylinders 21a, 21b, 22a, 22b on the rear axles 20a, 20b.

The second driven rear axle 20b does not comprise PCVs and receives the brake pressure for its brake cylinders 21b, 22b from the brake cylinders 21a, 22a of the first driven rear axle 20a, more precisely from respective nodes (on both sides) between the PCVs 28 and the brake cylinders 21a, 22a. In addition, also the select low valve 300 receives both pressures from these nodes and forwards the lower pressure to the TCV 50.

The TCV 50 is again connected to the third supply pressure 235 and receives the first channel output 201 from the PCM 200 (as described in **Fig. 2**). In addition, the TCL 50 includes parking brake port 56 to receive parking brake requests. The parking brake input port may be adapted to activate a relay valve to provide a parking brake function for the trailer, wherein the parking brake function may activate the brake at trailer independently from a control pressure 101 (e.g. from a foot brake module).

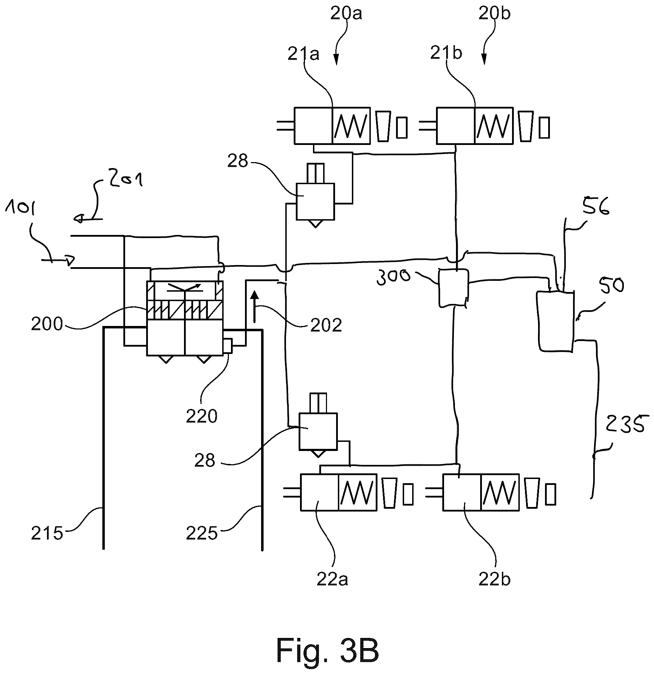

**Fig. 3B** depicts an embodiment for the commercial vehicle with two driven rear axles as in **Fig. 3A**. However, this embodiment does not include an interconnecting relay valve 29, because the volume of pressurized air supplied from the second channel port 220 of the PCM 200 is sufficient in this embodiment to provide a desired brake force on both driven rear axles 20a, 20b. Whether or not the pressurized air supply suffice depends of course on the type of vehicle (e.g. on a possible load). All other components are the same as in the embodiment of **Fig. 3A** so that a repetition can be omitted here.

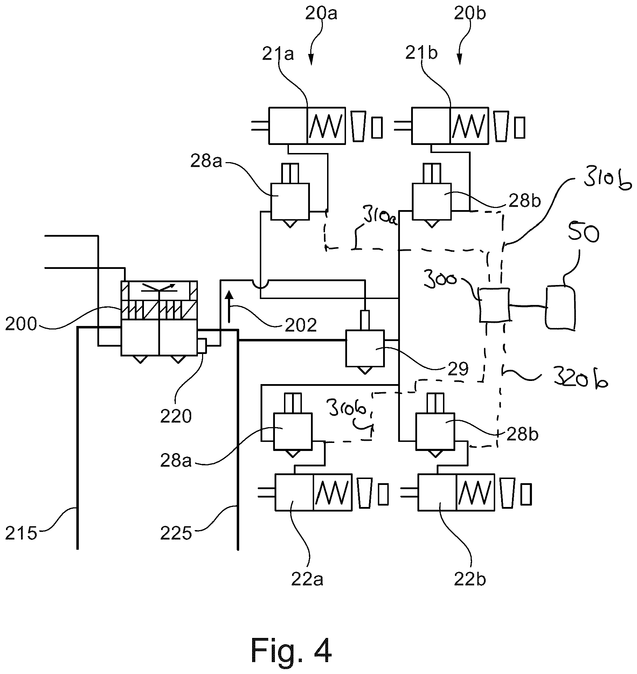

**Fig. 4** depicts an embodiment for a commercial vehicle with two rear axles 20a, 20b, wherein only one of them is driven. The two rear axles 20a, 20b are each equipped exemplary with two PCVs 28a, 28b. The applied pressure on both rear axles 20a, 20b is amplified by the interconnected relay valve 29 (as in **Fig. 3A**) which is adapted to adjust the volume pressure from the pressure output 202 of the second channel port 220 of the PCM 200 to ensure that it is sufficient for the four brake cylinders 21a, 21b, 22a, 22b on the rear axles 20a, 20b.

The select low valve 300 may couple only to the driven axle. For example, if the first rear axle 20a is driven, the select low valve 300 will take - via a connecting line 310a - the pressure from both brake cylinders 21a, 22a from the first rear axle 20a and forwards the lower pressure to the TCL 50. On the other hand, if the second rear axle 20b is driven, the select low valve 300 will take - via another connecting line 310b - the pressure from both brake cylinders 21b, 22b from the second rear axle 20b and forwards the lower pressure to the TCL 50. All other components are the same as in the embodiments of the previous Figs. so that a repetition can be omitted here.

Therefore, embodiments can receive the brake pressure for the second rear axle 20b from the pressure line between the PCV 28a and brake cylinder 21a, 22a which corresponds to the respective wheel pressure at the first rear axle 20a (see **Fig. 3A** and **Fig. 3B**)**.** However, if this solution suffers from insufficient pressure volume to brake two axles, the PCVs may be installed on both rear axles 20a, 20b and both rear axles 20a, 20b are provided separately with the brake pressure from the interconnecting relay valve 29 (see **Fig. 4**). An advantage of this solution is the timely release of the brakes in view of the multiple PCVs of all wheels on two axles. Embodiments achieve these advantages by the additional relay valve 29 and by adding dedicated PCVs 28b on the second rear axle 20b. A skilled person will appreciate that the PCM 200 may include already a relay valve upstream the second channel port 220 so the additional relay valve 29 may further increase the pressure volume to be sufficient for the two axles 20a, 20b.

According to the embodiment of **Fig. 3B**, if the PCM 200 is able to provide sufficient pressure volume for the two axles 20a, 20b, the second channel port 220 can be connected to both axles 20a, 20b (i.e. without the interconnecting relay valve 29). In this case, optionally, the second rear axle 20b may also be equipped with two PCVs 28b (in addition to the PCVs 28a on the first rear axle 20a). However, it is also possible to apply on both sides on the second rear axle 20b with the same pressure, i.e. without arranging PCVs on the second rear axle 20b as depicted in **Fig. 3B**.

According to embodiments, all wheels can be equipped with speed sensors 14, 24. This may apply to 2- or 3-axle or more-axle vehicles independently of whether they are driven or not. The wheel sped sensors enable a select smart. For example, if one wheel has a tendency to lock, the braking pressure may be reduced for both wheels on that side. Embodiments where both brake cylinders on one side are supply with the same brake pressure (see e.g. **Fig. 3A** and **Fig. 3B**) are particularly suitable for situations where both axles have a same axle load. When axles may have different axle loads and/or need separate pressure control, the additional PCVs are installed as shown in the **Fig. 4****.** The select-low valve 300, however, will be put behind the PCVs of the driven axle only. This will ensure that during traction control interventions, the trailer is not braked.

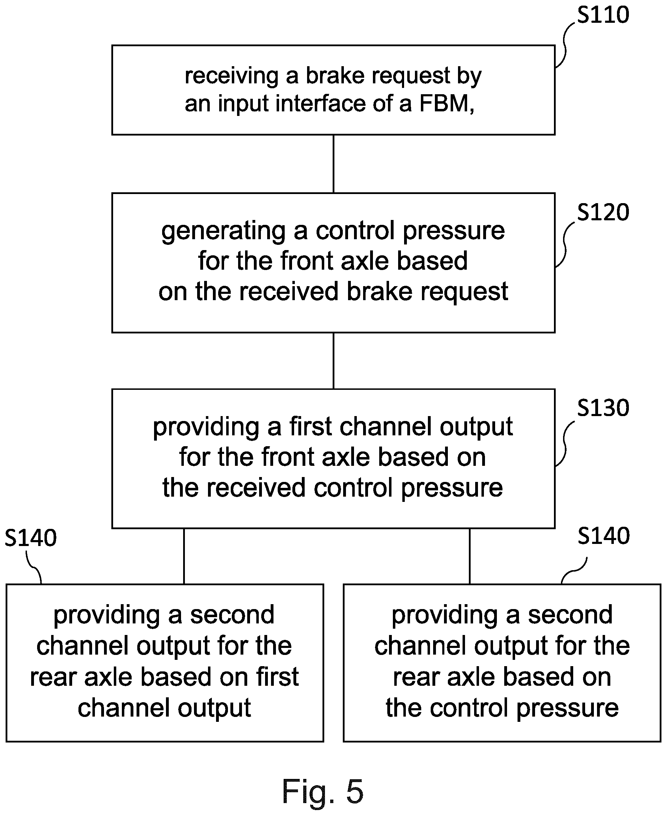

**Fig. 5** depicts a schematic flow diagram of a method, according to embodiments. The method includes (at least) the steps of:
- receiving S110 a brake request by an input interface 130 of a foot brake module, FBM, 100;
- generating S120 a control pressure 101 for the front axle 10 based on the received brake request;
- providing S130, by a pressure control module, PCM, 200, a first channel output 201 for the front axle 10 based on the received control pressure 101;
- providing S140, by the PCM 200, a second channel output 202 for the at least on rear axle 20 based on first channel output 201 or based on the control pressure 101.

This method may be a method of controlling a backup brake pressure in a commercial vehicle connectable with a trailer, wherein the commercial vehicle comprises again a front axle 10 with front brake cylinders 11, 12 controlled by a first brake circuit, at least one rear axle 20 with rear brake cylinders 21, 22 controlled by a second brake circuit, and a pneumatic trailer connector 50 (TCV or TPM) for the trailer.

According to embodiments, the steps of providing S130, S140 the first channel output 201 and the second channel output 202 are performed (only) as a backup mode if a malfunctioning prevents a primary mode of operation, wherein the primary mode of operation includes the additional steps:
- generating, by the FBM 100, electronic brake signals 150 based on the brake request;
- generating, by the PCM 200, a first channel output 201 for the front axle 10 based on the electronic brake signals 150;
- generating, by the PCM 200, a second channel output 202 for the rear axle 20 based on the electronic brake signals 150.

It is understood that all functions described before as part of the braking system can be implemented as further, optional, method steps.

Embodiments offer thus a cost-optimized EBS system that is a hybrid of an ABS and an EBS system. This low-cost EBS system offers the possibility of supporting both a TCM as well as a much more cost-effective TCV. The functional limitations of the TCV variant are overcome by the additional installation of a pneumatic component (Select Low valve 300).

The description and drawings merely illustrate the principles of the disclosure. It will thus be appreciated that those skilled in the art will be able to devise various arrangements that, although not explicitly described or shown herein, embody the principles of the disclosure and are included within its scope.

Functions of various elements shown in the figures, including any functional blocks may be provided through the use of dedicated hardware, such as "modules", "units", "a controller", etc. as well as hardware capable of executing software in association with appropriate software. Moreover, any entity described herein as a "controller", may correspond to or be implemented as "one or more modules", "one or more controllers", "one or more units", etc. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods. Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some examples a single act may include or may be broken into multiple sub acts. Such sub acts may be included and part of the disclosure of this single act unless explicitly excluded.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 10: front axle
- 11,12: front brake cylinders
- 14: wheel speed sensors
- 15,25,35: air reservoir(s)
- 16: brake pad wear sensors
- 18,28: pressure control valves
- 20: rear axle(s)
- 21,22: rear brake cylinders
- 50: pneumatic trailer connector
- 51, 52: control input ports
- 56: input line or port for a parking brake request
- 100: foot brake module (FBM)
- 101: control pressure
- 105: pressure supply for FBM
- 110: pneumatic output port
- 130: input interface
- 150: electronic brake signals
- 200: pressure control module (PCM)
- 201: first channel output
- 202: second channel output
- 210: first channel port
- 215: first supply pressure
- 217: first relay valve
- 220: second channel port
- 225: second supply pressure
- 227: second relay valve
- 230: first pneumatic backup port
- 235: third supply pressure
- 240: second pneumatic backup port
- 250: pressure control line
- 255: valve port
- 270: electronic controller
- 300: select-low valve
- 310a, 310b: connecting line for the select-low valve

## Claims

1. A brake system for a commercial vehicle connectable with a trailer, the commercial vehicle comprising a front axle (10) with front brake cylinders (11, 12) controlled by a first brake circuit, at least one rear axle (20) with rear brake cylinders (21, 22) controlled by a second brake circuit, and a pneumatic trailer connector (50), **characterized by**:
- a foot brake module, FBM, (100) comprising a pneumatic output port (110) for the first brake circuit, an input interface (130) for receiving a brake request, the FBM (100) being configured to generate a control pressure (101) at the pneumatic output port (110) based on the brake request;
- a pressure control module, PCM, (200) with a first channel port (210), a second channel port (220), a first pneumatic backup port (230), and a second pneumatic backup port (240), the first channel port (210) being configured to provide a first channel output (201) for the front axle (10), the second channel port (220) being configured to provide a second channel output (202) for the at least one rear axle (20), wherein the first pneumatic backup port (230) is fluidly connectable to the first channel port (210) and the second pneumatic backup port (240) is fluidly connectable to the second channel port (220); and
- a pressure control line (250) connecting the second pneumatic backup port (240) with the first channel port (210) or with the pneumatic output port (110), the pressure control line (250) comprises a valve port (255) configured to couple to the pneumatic trailer connector (50) to control a brake pressure in the trailer.

2. The brake system according to claim 1, wherein the pneumatic trailer connector (50) includes a first control input port (51) connectable to the pressure control line (250) and a second control input port (52), the brake system further comprising:
a select-low valve (300) configured to forward a lower pressure of both sides of the rear brake cylinders (21, 22) to the second control input port (52) of the pneumatic trailer connector (50).

3. The brake system according to claim 3, wherein the vehicle comprises multiple rear axles (20a, 20b), wherein only one of which is driven, and
wherein the select-low valve (300) configured to forward a lower pressure of both sides of the rear brake cylinders (21, 22) only from the one driven rear axle to the second control input port (52) of the pneumatic trailer connector (50).

4. The brake system according to claim 2 or claim 3, further including the pneumatic trailer connector (50) and the pneumatic trailer connector (50) is a trailer control valve, TCV, with an optional pressure control valve, the TCV (50) being controllable only pneumatically and/or mechanically and the optional pressure control valve being adapted to control a brake pressure provided to the trailer.

5. The brake system according to claim 1, further including the pneumatic trailer connector (50) and the pneumatic trailer connector (50) is a trailer control module, TCM, the TCM (50) comprising one or more solenoids and a pressure sensor to implement a pressure control circuit, the TCM (50) includes a pneumatic control input connected to the pressure control line (250) to enable a pneumatic control and an electronic input to enable an electronic control.

6. The brake system according to any one of claims 1 to 5, wherein the at least one rear axle (20) includes a first rear axle (20a) with first rear brake cylinders (21a, 22a) and a second rear axle (20b) with second rear brake cylinders (21b, 22b),
the brake system further including an interconnected relay valve (29) with a control input connected to the second channel port (220) and a pneumatic output connected to the first rear brake cylinder (21a, 22a) and to the second rear brake cylinders (21b, 22b).

7. The brake system according to any one of claims 1 to 6,
wherein the FBM (100) is configured to sense the activation of the input interface (130) and to generate electronic brake signals (150) based on the sensed activation, and wherein the PCM (200) includes an electronic controller (270) configured to receive the electronic brake signals and to control the PCM (200) to generate, based thereon, the first channel output (201) and the second channel output (202).

8. The brake system according to claim 7, wherein the PCM (200) is further configured to connect the first pneumatic backup port (230) with the first channel port (210) and/or to connect the second pneumatic backup port (240) with the second channel port (220) only when the electronic controller (270) is unable to generate the first channel output (201) and/or the second channel output (202) based on the electronic brake signals (150).

9. The brake system according to any one of claims 1 to 8, wherein the PCM (200) includes a first supply pressure (215), a second supply pressure (225), a first relay valve (217) and a second relay valve (227),
wherein the first relay valve (217) is configured to provide a first brake pressure for brake cylinders on the front axle (10) utilizing the first supply pressure (215), and wherein the second relay valve (227) is configured to provide a second brake pressure for brake cylinders on the at least one rear axle (20) utilizing the second supply pressure (215).

10. The brake system according to claim 9, further comprising at least one of the following:
- a first air reservoir (15) for supplying the first supply pressure (215) to the PCM (200) and for providing a supply pressure (105) to the FBM (100),
- a second air reservoir (25) for supplying the second supply pressure (225),
- a third air reservoir (35) for providing a third supply pressure (235) as pressure supply for the pneumatic trailer connector (50),
- one or more wheel speed sensors (14) for determining one or more respective wheel speeds at the front axle (10) and/or wheel speeds at the at least one rear axle (20),
- one or more brake pad wear sensors (16) for determining one or more respective brake pad wear values at the front axle (10) and/or at the at least one rear axle (20),
- one or more pressure control valves, PCV, (18, 28) at the front axle (10) and/or at the at least one rear axle (20), each PCV (18, 28) is configured to adjust a pressure at a respective wheel.

11. The brake system according to claim 10, further comprising at least one select-high valve arranged between two of the first to third air reservoirs (15, 25, 35) and to provide a higher pressure value as the first supply pressure (215), the second supply pressure (225) or as the third supply pressure (235).

12. A vehicle, in particular a commercial vehicle configured to couple to at least one trailer, with a brake system according to any one of the preceding claims.

13. A method for controlling a backup brake pressure in a commercial vehicle connectable with a trailer, the commercial vehicle comprising a front axle (10) with front brake cylinders (11, 12) controlled by a first brake circuit, at least one rear axle (20) with rear brake cylinders (21, 22) controlled by a second brake circuit, and a pneumatic trailer connector (50) for the trailer, the method being
**characterized by**:
- receiving (S110) a brake request by an input interface (130) of a foot brake module, FBM, (100);
- generating (S120) a control pressure (101) for the front axle (10) based on the received brake request;
- providing (S130), by a pressure control module, PCM, (200), a first channel output (201) for the front axle (10) based on the received control pressure (101);
- providing (S140), by the PCM (200), a second channel output (202) for the at least on rear axle (20) based on first channel output (201) or based on the control pressure (101).

14. The method of claim 13, wherein the steps of providing (S130, S140) of the first channel output (201) and the second channel output (202) are performed as backup mode if a malfunctioning prevents a primary mode of operation, the primary mode of operation including the steps:
- generating, by the FBM (100), electronic brake signals (150) based on the brake request;
- generating, by the PCM (200), a first channel output (201) for the front axle (10) based on the electronic brake signals (150);
- generating, by the PCM (200), a second channel output (202) for the rear axle (20) based on the electronic brake signals (150).
